**Europäisches Patentamt**

**European Patent Office**

**Office européen des brevets**

(19)

(11) Veröffentlichungsnummer: **0 000 173**
**B1**

(12) **EUROPÄISCHE PATENTSCHRIFT**

(21) Anmeldenummer: **78100200.1**

(22) Anmeldetag: **20.06.78**

(51) Int. Cl.³: **C 01 B 17/46**

(54) Verfahren zur Herstellung von Chlorsulfonsäure

(30) Priorität: **02.07.77 DE 2730011**

(43) Veröffentlichungstag der Anmeldung:
**10.01.79 Patentblatt 79/01**

(45) Bekanntmachung des Hinweises auf die Patenterteilung:
**14.01.81 Patentblatt 81/02**

(84) Benannte Vertragsstaaten:
**BE CH DE FR GB NL**

(56) Entgegenhaltungen:
**FR - A - 418 179**
**FR - A - 496 189**
**US - A - 2 311 619**

(73) Patentinhaber: **HOECHST AKTIENGESELLSCHAFT**
**Postfach 80 03 20**
**D - 6230 Frankfurt/Main 80 (DE)**

(72) Erfinder: **Börger, Rolf**
**Odenwaldstrasse 10**
**D - 6233 Kelkheim (Taunus) (DE)**
**Malow, Egon**
**Herderstrasse 25**
**D - 6203 Hochheim am Main (DE)**
**Renken, Albert, Prof. Dr.**
**Chemin-de-Champ-Fleuri 8**
**CH-1022 Chavannes (CH)**
**Riess, Gerhard, Dr.**
**Heimchenweg 80**
**D - 6000 Frankfurt/Main (DE)**

Courier Press, Leamington Spa, England.

# Verfahren zur Herstellung von Chlorsulfonsäure

Die vorliegende Erfindung betrifft ein Verfahren zur Herstellung von reiner Chlorsulfonsäure aus Chlorwasserstoff und Schwefeltrioxid in Chlorsulfonsäure.

Bei der technischen Herstellung von Chlorsulfonsäure läßt man im allgemeinen Schwefeltrioxid und trockenen gasförmigen Chlorwasserstoff miteinander reagieren, wobei man reines flüssiges oder gasförmiges Schwefeltrioxid oder Kontaktgase mit ca. 7—10% $SO_3$ verwenden kann.

Man kann auch gasförmigen Chlorwasserstoff in einer Füllkörperkolonne auf flüssiges Schwefeltrioxid oder ein Gemisch von Chlorsulfonsäure und Schwefeltrioxid — chargenweise oder kontinuierlich — einwirken lassen, wobei man die entstehende Reaktionswärme durch Außenkühlung abführt.

Bei Verwendung von gasförmigem Schwefeltrioxid läßt man die Reaktionskomponenten in einer Füllkörperkolonne reagieren, die mit Chlorsulfonsäure berieselt wird. Die Reaktionswärme wird durch Kühlung der umgepumpten Säure in einem gesonderten Kühler abgeführt.

Es ist ferner bekannt, die Reaktionskomponenten gasförmig in einer Schicht siedender Chlorsulfonsäure, beispielsweise in einer Füllkörperkolonne einzuleiten und dort umzusetzen, wobei die entstehende Reaktionswärme durch verdampfende Chlorsulfonsäure abgeführt wird (DT-AS 1 226 991).

Aus der US-PS 2 311 619 ist ein Verfahren zur Herstellung von Chlorsulfonsäure bekannt, das in zwei Stufen arbeitet. Zünächst wird HCl-Gas in einem ersten Turm mit heißer Chlorsulfonsäure in Kontakt gebracht, die etwa 30 Gew.-% Schwefeltrioxid enthält. Anschließend werden die im ersten Turm nicht kondensierten Anteile in einem zweiten Turm niedergeschlagen, in dem kalte Chlorsulfonsäure mit einem niedrigeren $SO_3$-Gehalt zirkuliert. Bei diesem Verfahren werden also zwei Absorptionskreisläufe (enthaltend Absorptionsturm, Pumpe und Vorratsbehälter mit Chlorsulfonsäure unterschiedlicher $SO_3$-Konzentration) gebraucht.

Diese Verfahren haben den Nachteil, daß sie apparativ sehr aufwendig und ihre Raum-Zeit-Ausbeuten relativ niedrig sind.

Nach dem Verfahren der DT—OS 20 59 293 wird Chlorwasserstoff mit gasförmigem Schwefeltrioxid in einer Zweistoffdüse gründlich durchmischt. Die gebildete Chlorsulfonsäure fällt zunächst dampfförmig an und wird in nachgeschalteten Kondensatoren verflüssigt. Da jedoch oberhalb von 100°C die Zersetzung der Chlorsulfonsäure unter Bildung von Schwefelsäure und Sulfurylchlorid einsetzt, fallen bei diesem Verfahren Produkte an, die nicht rein sind.

Es bestand daher die Aufgabe, ein Verfahren zu finden, das bei hoher Raum-Zeit-Ausbeute reine Chlorsulfonsäure liefert, dieses sollte möglichst unter 100°C verlaufen.

Es wurde nun ein Verfahren zur Herstellung von Chlorsulfonsäure aus Chlorwasserstoffgas und Schwefeltrioxid, das in Chlorsulfonsäure gelöst ist, gefunden, das dadurch gekennzeichnet, ist, daß man Chlorwasserstoffgas und das in Chlorsulfonsäure gelöste Schwefeltrioxid in einer Venturidüse vermischt und reagieren läßt, wobei am Ende des Venturirohres die Temperatur 70 bis 100°C betragen soll.

Der Erfindung liegt die Erkenntnis zugrunde, daß die Vermischung des Gases mit der Flüssigkeit den geschwindigkeitsbestimmenden Schritt darstellt und daß die eigentliche Reaktion zwischen gelöstem Chlorwasserstoff und Schwefeltrioxid sehr rasch verläuft.

Beim erfindungsgemäßen Verfahren wird Chlorwasserstoff auf der Gasanschluß-Seite eines Venturirohres durch enge Bohrungen, die an der Kehle (d.h. der engsten Stelle des Rohres) oder in der Nähe der Kehle angebracht sind, eingepreßt. Zusätzliche Bohrungen können an Stellen angebracht sein, die näher zum Rohrausgang liegen, d.h. bei denen das Rohr bereits einen größeren Durchmesser hat. Eine solche Anordnung ist z.B. in der DT—AS 1 300 913 beschrieben.

Es ist jedoch von Vorteil, die Löcher ausschließlich in der Nähe der Kehle anzuordnen. Die Chlorsulfonsäure wird über einen Flüssigkeitsstutzen eingepumpt. Der Zustrom der eingepumpten Flüssigkeit kann durch ein kegelförmiges Ventil reguliert werden. Die Durchmischung der Reaktionspartner findet in der Hauptsache in der Nähe der Eintrittslöcher statt. Am Ende des mit der Düse verbundenen Venturirohres ist Durchmischung und Reaktion in der Regel beendet. Um eine gründliche Durchmischung der beiden Reaktionspartner zu erreichen, soll Chlorwasserstoff in möglichst kleine Bläschen aufgelöst werden. Die Größe der Bläschen kann man durch Verändern der folgenden Parameter beeinflussen:

1. Bei gegebenem Chlorwasserstoffgasstrom (Liter/Stunde) und gegebenem Gesamtquerschnitt der Öffnungen, durch die der Chlorwasserstoff in die Venturidüse eintritt, ist es vorteilhaft, möglichst viele Löcher mit jeweils kleinem Querschnitt anstatt einiger weniger Löcher mit großem Querschnitt zu verwenden. Trotz gleichem Gesamtquerschnitt werden im ersten Fall kleinere Gasbläschen resultieren.

2. Bei gegebenem Gasstrom und gegebener Anzahl der Düsenlöcher sollen die Löcher möglichst groß sein, um die Gaseintrittsgeschwindigkeit (Meter/Sekunde) und damit die Größe der Gasblasen zu verringern. Jedoch sind der Vergrößerung der einzelnen Öffnungen und der Anzahl der Öffnungen durch die mechanische Stabilität der Kehle der Venturidüse Grenzen gesetzt. In der Regel werden die Öffnungen für das Chlorwasserstoffgas um die Düse so angeordnet, daß sie die Ecken eines regelmäßigen n-Eckes darstellen.

3. Unabhängig vom gegebenen Gasstrom ist ein möglichst großer Flüssigkeitsstrom (Liter/Stunde) für die Durchmischung wünschenswert. Wegen der stöchiometrischen Verknüpfung von Gas- und Schwefeltrioxid-Menge bedeutet dies, daß die Konzentration des gelösten Schwefeltrioxids in der Chlorsulfonsäure um so weiter absinkt, je größer das Verhältnis Flüssigkeit : Gas (l/h : l/h) ist.

Die Herstellung von Lösungen von Schwefeltrioxid in Chlorsulfonsäure ist bekannt. Man kann beispielsweise gasförmiges Schwefeltrioxid mittels Absorben in Chlorsulfonsäure lösen oder flüssiges Schwefeltrioxid mit Chlorsulfonsäure vermischen. Zur Verhinderung des Auskristallisierens von Schwefeltrioxid aus diesen Lösungen ist es empfehlenswert, die Lösungen bei Temperaturen von über 40°C zu halten.

Das Verhältnis

$$V_G : V_F = \frac{\text{Einsatz HCL (l/h)}}{\text{Einsatz Flüssigphase (l/h)}}$$

liegt im allgemeinen bei 1 bis 40, insbesondere 4 bis 20, vorzugsweise 6 bis 10.

Bei Erhöhung des Verhältnisses $V_g/V_f$ und damit der Konzentration an gelöstem Schwefeltrioxid in der Chlorsulfonsäure, wird die Durchmischung schlechter und der durch die Reaktionswärme bedingte Temperaturanstieg höher. Es besteht damit die Gefahr, daß nicht reagiertes $SO_3$ das Venturirohr verläßt. Deshalb ist es auch sinnvoll, dem Venturirohr einen Nachreaktor, beispielsweise eine Blasensäule, nachzuschalten. Im Normalfall reicht aber das relativ kleine Volumen des Venturirohres als Reaktionsraum aus, was zu hohen Raum-Zeit-Ausbeuten führt.

Eine Verringerung des Verhältnisses $V_g/V_f$ ist ohne weiteres möglich, aber (wegen der Erhöhung der Pumpenergie zur Erhöhung von $V_F$ und der Verringerung der Raum-Zeit-Ausbeute) unwirtschaftlich.

Das Molverhältnis HCl/$SO_3$ liegt im allgemeinen bei 1 : 1 jedoch kann auch ein überschuß an HCl, beispielsweise von 1—10%, insbesondere 8—10% verwendet werden.

Venturirohre und Venturidüsen sind dem Fachmann bekannt. Beim erfindungsgemäßen Verfahren ist die räumliche Stellung des Venturirohres nicht kritisch; beispielsweise kann das Rohr nach oben, nach unten oder in der waagrechten ausgerichtet sein. Falls an das Rohr jedoch eine Blasensäule angeschlossen werden soll, ist es vorteilhaft, das Rohr nach oben auszurichten.

Bei einer Chlorsulfonsäure, die ca. 1% $SO_3$

enthält, ist bei der Reaktion ein Temperaturanstieg von ca. 20°C zu beobachten. Durch geeignete Festsetzung der Temperatur der $SO_3$ enthaltenden Chlorsulfonsäure läßt sich die gewünschte Endtemperatur von 70 bis 100°C leicht erreichen. Nach dem erfindungsgemäßen Verfahren läßt sich eine Chlorsulfonsäure herstellen, die praktisch frei ist von Schwefeltrioxid.

Die Erfindung wird durch folgendes Beispiel erläutert:

Beispiel

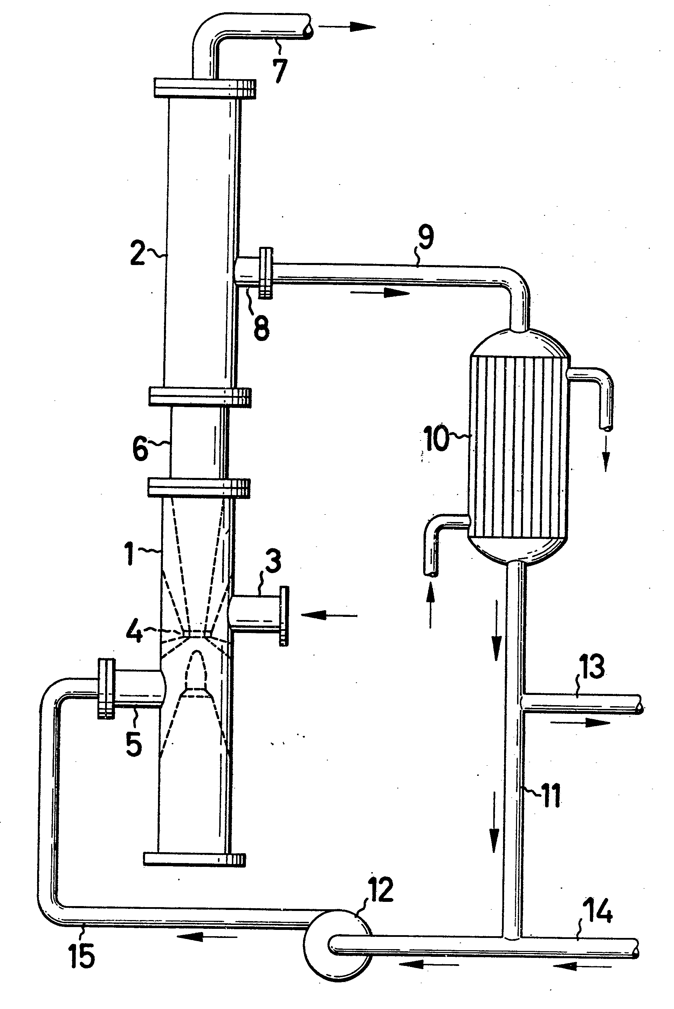

Die Versuchsanordnung ist in der Figur dargestellt. Über einem vertikal stehenden Venturirohr (1) ist eine Blasensäule (2) mit dem Reaktorvolumen 7,4 l angeordnet. In das Venturirohr (Modell RM 1 von Quickfit) wird durch den Gasanschluß-Stutzen (3) 520 l pro Stunde Chlorwasserstoff durch Löcher in der Kehle (4) eingepreßt (12 Löcher mit je 0,65 mm Durchmesser die symmetrisch angeordnet sind). Gleichzeitig werden 93 Liter/h Chlorsulfonsäure (Temperatur: 60°C), die $SO_3$ gelöst enthält, durch den Flüssigkeitsstutzen (5) zur Kehle des Venturirohres gepumpt. Die Höhe des Venturirohres beträgt 140 mm, der Durchmesser an der Kehle 7 mm, an der weitesten Stelle 19 mm.

An der Kehle (Düse) und im Venturirohr werden Gas und Flüssigkeit innig vermischt. Am Ende des Venturirohres beträgt die Reaktionstemperatur 80°C. Dort wird das Reaktionsgemisch über Leitung (6) abgenommen und in die Blasensäule (2) eingeführt. In der Blasensäule trennt sich die flüssige Phase vom Chlorwasserstoff, der durch Leitung (7) abgezogen wird. Das flüssige Reaktionsgemisch (Chlorsulfonsäure) wird durch den seitlichen Stutzen (8) und die Rohrleitung (9) zum Kühler (10) geführt. Der Kühler wird mit frischem Kühlmedium (Beispiel: Tetrachlorkohlenstoff oder Wasser) gekühlt. Die gekühlte Chlorsulfonsäure wird durch Leitung (11) zur Pumpe (12) geführt. Durch Leitung (13) werden stündlich 2,9 kg neu gebildete Chlorsulfonsäure abgenommen. Durch Leitung (14) werden 1,05 l $SO_3$ pro Stunde der Chlorsulfonsäure zudosiert. Diese Lösung von Schwefeltrioxid in Chlorsulfonsäure wird durch Pumpe (12) über Leitung (15) und Flüssigkeitsstutzen (5) in das Venturirohr (1) eingeführt.

**Patentanspruch**

Verfahren zur Herstellung von Chlorsulfonsäure aus Chlorwasserstoff und Schwefeltrioxid, das in Chlorsulfonsäure gelöst ist, dadurch gekennzeichnet, daß man Chlorwasserstoffgas und das in Chlorsulfonsäure gelöste Schwefeltrioxid in einer Venturidüse vermischt und reagieren läßt, mit der Maßgabe daß am Ende des Venturirohres die Reaktionstemperatur 70 bis 100°C beträgt.

**Revendication**

Procédé de fabrication d'acide chlorosulfonique à partir de chlorure d'hydrogène et de trioxyde de soufre, ce dernier étant en solution dans de l'acide chlorosulfonique, procédé caractérisé en ce que l'on mélange le chlorure d'hydrogène gazeux avec la solution du trioxyde de soufre dans une buse ou tuyère de Venturi (4) où ils entrent en réaction, avec la condition qu'à l'extrémité du tube de Venturi, la température soit de 70 à 100°C.

**Claim**

Process for the manufacture of chlorosulfonic acid from hydrogen chloride and sulfur trioxide dissolved in chlorosulfonic acid, characterized by mixing the sulfur trioxide dissolved in chlorosulfonic acid and hydrogen chloride gas in a Venturi nozzle, allowing them to react and keeping the temperature at the end of the Venturi tube in the range of from 70 to 100°C.